Europäisches Patentamt

European Patent Office

Office européen des brevets

(19)

(11) Publication number: **0 221 471**
A2

# (12) EUROPEAN PATENT APPLICATION

(21) Application number: 86114787.4

(22) Date of filing: 24.10.86

(51) Int. Cl.⁴: **G 01 L 3/10**

(30) Priority: 01.11.85 SE 8505170

(43) Date of publication of application:
13.05.87 Bulletin 87/20

(84) Designated Contracting States:
DE FR GB IT

(71) Applicant: ASEA AB

S-721 83 Västeras(SE)

(72) Inventor: Nordvall, Jan
Rundhällsvägen 10
S-722 31 Västeras(SE)

(74) Representative: Boecker, Joachim, Dr.-Ing.
Rathenauplatz 2-8
D-6000 Frankfurt a.M. 1(DE)

(54) Torque transducer.

(57) 1. Torque transducer comprising a measuring axle (4), the stress of which is measured by means of electric or magnetic methods. In order to achieve neutral point compensation the measuring axle is designed as a hollow axle (4'), inside which a slender torsion spring (18) is axially arranged with one end rigidly attached to one end of the measuring axle and the other end rigidly attached to a means of attachment (20) which is rotatably and lockably arranged at the other end of the measuring axle. By twisting the torsion spring (18) at a specific angle a constant torque load on the measuring axle can be set with such a direction and magnitude that the false neutral point voltage of the torque transducer is compensated.

FIG. 5

EP 0 221 471 A2

ASEA AB
S-721 83 Västeras / Sweden

Torque transducer

The present invention relates to a torque transducer according to the precharacterising part of Claim 1. Such torque transducers permit the measuring of the torque on rotating or stationary axles in a contactless manner.

Magnetoelastic torque transducers are well known, for example from SE-B-167,387. These known transducers have the disadvantage that internal stresses in the surface area of the axle material cause variations in the output signal of the transducer upon rotation of the axle. Admittedly, these variations can be reduced by heat treatment of the axle or by increasing the number of poles on the transducer in question or, where possible, by measuring for a longer period of time to form a more accurate mean value. However, it is difficult, using heat treatment methods, to reduce the internal stresses in the axle surface below about 10 N/mm$^2$, and even with a greater number of poles, the signal variation upon rotation of the axle will be considerable, at least if immediate measurement is required so that the formation of a mean value over a certain time interval is not allowable.

US-A-4,506,554 discloses a torque transducer comprising a sleeve of a magnetic material, which is attached concentrically and rigidly to an axle, and at least two stationary windings for excitation of a magnetic flux passing through the sleeve and two windings for sensing the torque transmitted to the axle, as well as a magnetic casing concentrically surrounding the windings. Characteristic is that the sleeve is designed with two parallel, annular zones which are provided with slots with a substantially regular pitch the slots of one zone making an angle of $+45^{\circ}$ and the slots of other zone making an angle of $-45^{\circ}$ with the generatrix to the envelope surface of the sleeve. The excitation windings are connected in series and generate a magnetic flux in the sleeve. The measuring windings are connected in opposition, whereby the measurement signal becomes approximately zero if no torque is applied on the axle. When the axle is subjected to a torque, the strips between the slots in the zones will be subjected to tensile stress and compressive stress, respectively, in the direction of the flux. This leads to a polarized magnetic imbalance, resulting in a difference voltage from the measuring windings which, after phase-sensitive detection, provides a measure of the torque in terms of magnitude and sign.

The problem with torque transducers - irrespective whether the torque in the measuring axle when subjected to stress is measured by electrical or magnetic methods - is that an electrical measurement signal is practically always obtained in the mechanically unloaded state. This zero signal is normally compensated for by introducing an electric balancing voltage. In certain applications, where extreme security requirements prevail, it is, however, an absolute requirement that the mechanical and the electrical neutral point coincide under all circumstances. This requirement excludes the use of an electric balancing voltage, since drop out of either the transducer signal or the balancing voltage in the case of an unloaded axle may have disastrous consequences.

The invention aims at developing a torque transducer of the above-mentioned kind in which the measuring voltages at the mechanically neutral point will be zero under all possibly occurring conditions.

To achieve this aim the invention suggests a torque transducer according to the introductory part of Claim 1, which is characterized by the features of the characterizing part of Claim 1.

Further developments of the invention are characterized by the features of the additional claims.

According to the invention the neutral point voltage of the torque transducer is eliminated by introducing an internal torque, which provides such a stress on the measuring axle as to generate a constant signal which compensates for the false neutral point voltage. This is realized by designing the measuring axle as a tubular or hollow axle inside which a thin torsion spring is axially arranged with one of its ends rigidly attached to one end of the measuring axle and its other end rigidly attached to a means of attachment, which is rotatably and lockably arranged at the other end of the measuring axle.

The invention will now be described in greater detail with reference to the accompanying drawings showing - by way of example - in

Figures 1 and 2 a prior magnetoelastic torque transducer as described in US-A-4,506,554, to which the present invention is to be applied,

Figure 3 a principal diagram for current supply of the transducer and measurement of the signal voltage,

Figures 4 and 5 an embodiment of a measuring axle according to the invention designed as a hollow axle and provided with an internal torsion spring attached to conical plugs.

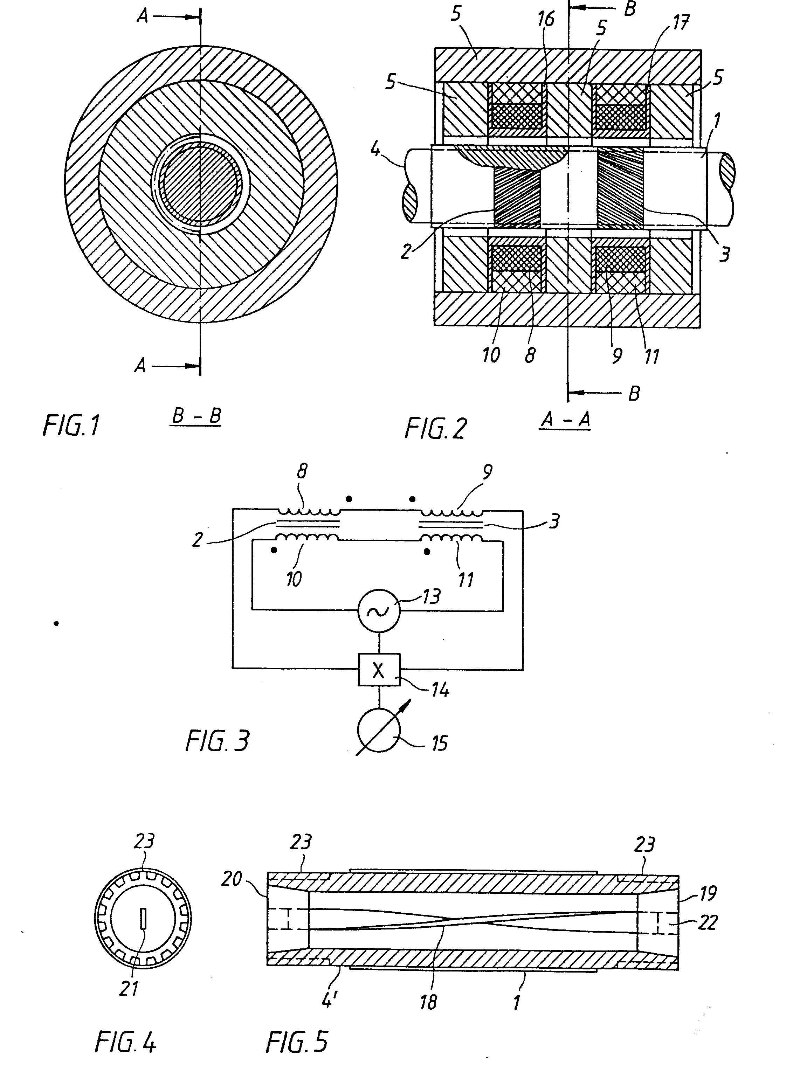

Figures 1 and 2 show, as an example for the application of the invention, a magnetic torque transducer, which is disclosed in detail in the US-A-4,506,554. The torque transducer has a measuring axle 4 which is provided with a measuring sleeve 1 of magnetic material, rigidly attached to the axle. The sleeve 1 has two parallel annular zones 2, 3 at a certain distance from each other, which are provided with mutually parallel milled-out slots, having an even pitch and making an angle of $+45^{\circ}$ and $-45^{\circ}$, respectively, with a generatrix to the cylindrical surfaces of the sleeve 1. Between these slots a corresponding number of strips are formed. Each zone 2, 3 is surrounded by two stationary bobbins 16, 17, being concentric with the axle 4, and carrying two series-connected coils 10, 11 for excitation of a magnetic flux in the zones 2, 3 by alternating current as well as two coils 8, 9, connected in opposition, for sensing the difference between the fluxes in the two zones 2, 3. An iron core 5, made as a solid of revolution with an E-shaped generating surface, surrounds the coils 8-11 and forms an air gap with the axle 4 at the three annular parts of the iron core 5.

If the zones 2, 3 are designed to be entirely symmetrical, the output signal will, in principle, be zero in the case of an unloaded axle 4 provided that the sleeve 1 is well centered in the iron core 5, and that the sleeve 1 is magnetically separated from the axle 4 - if the axle is of magnetic material - or that the axle 4 is of non-magnetic material.

If the axle 4 is subjected to a torsional moment, whereby the strips in one zone are subjected to tensile stress in the flux direction and the strips in the other zones are subjected to compressive stress in the flux direction with an ensuing increase and decrease, respectively, of the flux through the two zones 2, 3 in the case of a material with a positive magnetostriction, for example iron with a moderate excitation, a signal proportional to the torque is obtained.

In another torque transducer, according to the same physical principle, the magnetic orientation in the zones 2, 3 has instead been obtained by gluing two steel bands, having the desired magnetic orientation, around the axle 4.

In the described transducer embodiment with a measuring sleeve 1 with milled-out slots, the deviation from the ideal neutral value in the case of an unloaded axle 4 is, in addition to the previously mentioned conditions, also dependent on the precision with which the slots are milled. A certain magnetic imbalance under no-load conditions is therefore unavoidable, resulting in an undesired zero signal in the case of an unloaded axle 4. In the case of the embodiment with steel bands glued around the axle 4 and having a magnetic orientation of, in principle, $+45^{\circ}$ and $-45^{\circ}$, respectively, it is, of course, still much more difficult to obtain a zero output signal in the case of an unloaded axle 4.

Figure 3 shows that the coils 10 and 11 are supplied in series from an a. c. source 13 and that the signal from the coils 8 and 9, which are connected in opposition to one another, is rectified in a phase-sensitive manner in the controlled rectifier 14, comprising also filters. The signal is presented on an instrument 15.

Figures 4 and 5 show the measuring axle designed, in accordance with the invention, as a hollow or tubular axle 4' provided with a magnetic measuring sleeve 1 to provide space for a centrally positioned torsion spring 18, which is capable of loading the axle 4' with a torque of such a magnitude and direction that the desired zero signal is compensated. So that this compensation shall not be appreciably influenced by a measuring torque applied to the measuring axle 4', the torsion spring 18 has to be very slender in relation to the measuring axle 4' and must be twisted at a much more greater angle than the measuring axle 4'. In order that the temperature shall not appreciably influence the neutral point compensation, the material of the measuring axle 4' and the material of the torsion spring 18 should be chosen such that the temperature dependence of the modulus of elasticity is as equal as possible for the two materials. Otherwise, the spring 18 is suitably made in the form of a leaf spring of a thin band of hardened spring steel with a high yield point.

One end of the spring 18 should be rigidly attached to a means of attachment 19, which is fixedly arranged in one end of the measuring axle 4', and the other end of the spring 18 should be rigidly attached to a means of attachment 20, which is rotatably and lockably arranged in the other end of the measuring axle 4'. The rigid attachment of the two ends of the spring 18 can suitably consist of a narrow axial recess 21 in the means of attachments 19, 20 of both ends.

The above-mentioned means of attachment 19 and 20 may, of course, be formed in many different ways. Figures 4 and 5 show an embodiment with conical plugs at either end which are inserted into corresponding conical end portions of the inner cylindrical surface of the measuring axle 4'. The amount of taper of the conical surfaces is so small that the plugs are retained in a reliable manner after being pressed in. When mounting the spring device, the fixed plug 19 is first fixed in position by a light blow of a hammer. Thereafter, the torsion spring 18 and the rotatable and lockable plug 20 are fixed in position, and the plug 20 is turned, for example with a screw driver inserted into the narrow recess 21, until the signal voltage becomes zero in the case of an unloaded axle 4'. In this position the plug 20 is secured to the axle 4'by means of a light blow of a hammer. To center the spring 18 in the longitudinal direction, the outer part of the recess 21 in the stationary plug 19 has been filled up with a stop plug 22.

The requirement that the mechanical and electrical neutral points shall coincide, as stated at the beginning of the description, has been fulfilled by a solution presented according to the present invention.

In the embodiment according to Figure 4, the measuring axle has been provided with splines 23 at both ends for simple attachment between input and output axles. It if, of course, possible to use other axle attachment methods as well.

## C L A I M S

1. Torque transducer comprising a measuring axle (4), the stress of which is measured by means of electric or magnetic methods, c h a r a c t e r i z e d  in that to obtain coincidence between the electric and mechanical neutral points the measuring axle is designed as a hollow axle (4'), inside which a slender torsion spring (18) is axially arranged with one end rigidly attached to one end of the measuring axle and the other end rigidly attached to a means of attachment (20) which is rotatably and lockably arranged at the other end of the measuring axle.

2. Torque transducer according to claim 1, c h a r a c-t e r i z e d  in that the material of the measuring axle (4') and the material of the torsion spring (18) are chosen such that the temperature dependence of the modulus of elasticity is the same for the two materials.

3. Torque transducer according to claims 1 or 2,  c h a r a c t e r i z e d  in that the torsion spring (18) consists of a leaf spring of spring steel.

4. Torque transducer according to any of the preceding claims, c h a r a c t e r i z e d  in that the rotatable and lockable means of attachment (20) is formed as a conical plug, inserted into a corresponding conical expansion of the inner cylindrical surface of the measuring axle (4'), that the amount of taper of the conical surfaces is so small that the plug is retained after being pressed in, and that the plug is formed with a narrow axial recess (21) for the torsion spring (18).

October 15, 1986
21 782 PE **0221471**

1/1

FIG.1    B - B    FIG.2    A - A

FIG.3

FIG.4    FIG.5